# EUROPEAN PATENT APPLICATION

(11) **EP 1 148 449 A2**
(43) Date of publication of application: **24.10.2001**
(21) Application number: 01201249.8
(22) Date of filing: 03.04.2001
(51) Int. Cl.: G07F 15/00, G07F 7/02

(54) **Improvements in or relating to metering**

(30) Priority: 03.04.2000 GB 0008046
(71) Applicant: Siemens Metering Limited, Telford, Shropshire TF1 4ET (GB)
(72) Inventor: Pollock, Martin Robert, Shrewsbury SY3 9AU (GB)
(74) Representative: Humphrey-Evans, Edward John

(57) **Abstract**

Described herein is a metering arrangement (10) in which a coded receipt includes encoded data relating to an amount of a commodity purchased from a particular commodity supplier. The metering arrangement (10) including an input unit (24) which is capable of accepting the coded receipt and for providing a signal for a metering unit (12, 14, 20, 22) to control the operation of a switch (14) located therewith in accordance with a value credited to a memory (22) located therein. The arrangement (10) also includes a data collection unit (28, 32, 34) which accumulates consumption records for the commodity and transmits them to a central collection unit where they are processed and apportioned to the commodity suppliers.

## Description

The present invention relates to metering, and more particularly, although not exclusively, is concerned with the supply and metering of electricity supplies.

In the electricity supply industry (ESI), it is normal for a customer to have an account with a licensed electricity supplier - the customer having an account with one, and only one, electricity supplier at any given time. Typically, the quantity of electricity consumed by a customer over a particular time period is measured at the customer's premises, and the consumption information provided by the measuring device is used as the basis for calculating the customer's bill by applying one or more agreed tariffs. A typical time period over which the quantity of electricity is measured is three months, although the process can operate over a one month period, or any other period by agreement between the parties. The measuring device is a certified electricity meter and it is ultimately the responsibility of the electricity supplier to ensure that appropriate equipment is installed and properly maintained at their customers' premises.

The electricity supplier has many costs to consider in meeting the needs of its customers. It must purchase the energy which is eventually billed to the customer. It must also pay for the transmission and distribution costs which will be charged by the companies which actually brought the electricity through the physical cabling network to the customers' homes. A further complication is introduced by the fact that the price which an electricity supplier pays for electricity can vary on a half-hourly basis while the price at which he sells it is much less variable. For most residential customers, the selling price does not vary at all and a flat rate is charged at all times. However, it is known that several multi-rate tariffs can be applied to a supply.

Moreover, the amount of energy consumed each half hour is of interest to distribution and transmission companies because they must account for all energy passing through their networks at all times. Distribution and transmission companies bill suppliers for 'use of system' charges based on the quantity of energy distributed and the physical distances involved.

The effect of these complexities is that electricity supply companies do not normally know how much margin they will make on their customers' consumption until they have determined (a) how much energy was consumed and (b) when it was consumed. They need to know (a) because it has a scaling effect on both the bill and the distribution costs and they need to know (b) because it affects the price they themselves will pay. The overall process of calculating how much energy passes through the distribution and transmission system each half hour from every inlet to every outlet (including allowances for 'losses'), and hence who should pay whom for what, is called aggregation and settlement.

Clearly the necessary information could be gathered by installing appropriate data recorders and communications devices at every outlet, that is, in each home. However, the cost of this is relatively high and electricity suppliers, whose responsibility it is to define (and fund) what is required, are unwilling to invest in the necessary solutions because they have no guarantee that it is they who will derive the long-term benefit.

Furthermore, in certain countries, it is forbidden by Regulation to try to compel a consumer to remain committed to one electricity supplier for more than 28 days. The market trend is for increased competition in electricity supply, with a corresponding high pressure to allow consumers to shop around and not to become locked in by one supplier offering to fit special equipment in their homes.

Similarly, neither distributors nor meter operators will invest in new solutions because the necessary applications are defined by suppliers, their tariffs and their customers.

It is therefore an object of the present invention to provide a metering system which overcomes the problems described above.

In accordance with one aspect of the present invention, there is provided a metering arrangement for metering the supply of a commodity to a consumer, the arrangement comprising:-
a metering unit connected to supply the commodity to the consumer;
a data collection unit associated with the metering unit for collecting data relating to the amount of the commodity consumed; and
an input unit for receiving data input from a coded receipt which is coded in accordance with an amount of the commodity and a particular commodity supplier, the input unit being operable to control connection of the commodity supply.

In accordance with another aspect of the invention, there is provided a method of metering the supply of a commodity to a consumer from a commodity supply, comprising the steps of:
connecting a metering unit to a commodity supply:
collecting data relating to the amount of commodity consumed:
receiving data from a coded receipt by an input unit; and
transferring data received to the metering unit for controlling the connection of the commodity supply:
   wherein the coded receipt is coded in accordance with an amount of commodity to be supplied and a particular commodity supplier.

In accordance with the present invention, a system is provided in which a consumer is able to purchase any amount of a commodity, for example energy from any one of a plurality of commodity suppliers at any time. The system comprises at least one point-of-sale at which a commodity can be purchased, each point-of-sale providing the consumer with a special coded receipt which includes data relating to the amount of commodity purchased, the commodity supplier or utility company from which the commodity has been purchased and the point-of-sale itself. The system also comprises at least one meter which is adapted to supply the commodity in accordance with the special coded receipt. In one embodiment of the present invention, each meter consists of at least a commodity measurement device, a data recording device, a display device, a switch, a communications device and a special coded receipt input device.

A central collection unit is also provided in the system for collecting data from each meter and for apportioning the costs of the commodity consumed by a consumer to the respective commodity suppliers. The data may be collected manually, that is, by a meter reader, and then input to the central collection unit, or preferably, the data is collected automatically at the meter and then transmitted to the central collection unit at predetermined intervals. All data collected by the central collection unit is accumulated in accordance with each individual commodity supplier, the special coded receipts and the amount of commodity used (or meter readings).

It is already commonplace to utilise data recording and communications devices for transmitting energy (or electricity) consumption data on a half-hourly or other appropriate basis to a central collection point. The recording device is capable of buffering many half-hourly values until such time as a communications session is initiated either by the meter itself or by the central collection point.

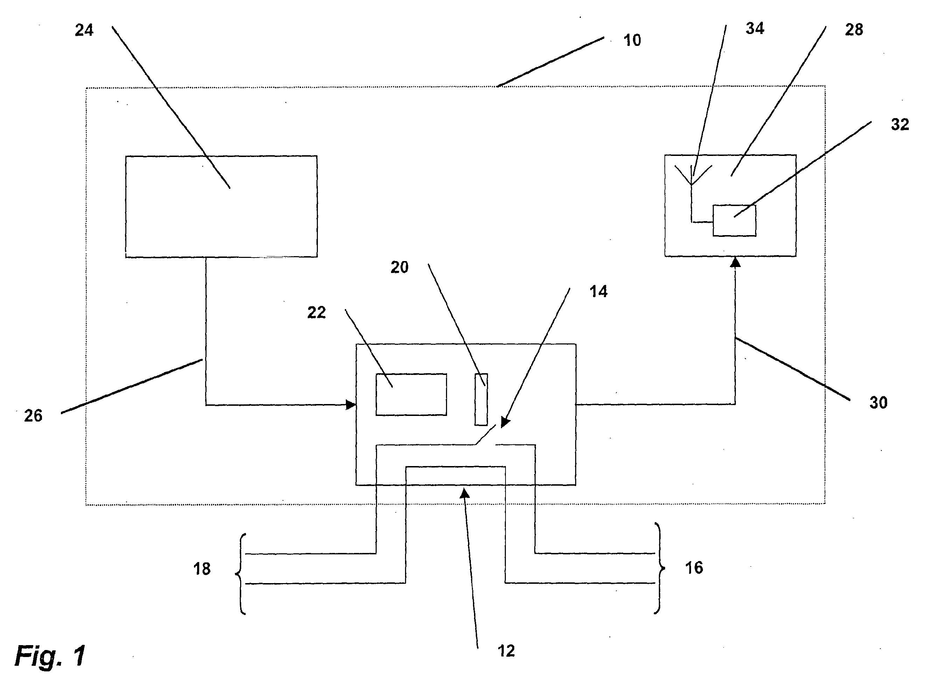

For a better understanding of the present invention, reference will now be made, by way of example only, to the accompanying drawing sheet, the single Figure of which illustrates a metering arrangement in accordance with the present invention.

Although the present invention will be described with reference to the supply of electricity and the metering thereof, it will readily be understood that the present invention is equally applicable to other commodities such as gas and water, as provided by gas utility companies and water utility companies.

Referring now to the Figure, a meter 10 in accordance with the present invention is shown, the meter 10 forming part of a Pay-As-You-Go system as is already known. In such systems, electricity is purchased at a point-of-sale and the consumer is provided with a 'token' which relates to the amount of electricity purchased. The 'token', when read by the meter 10, credits the consumer with the amount of electricity purchased.

The meter 10 comprises a metering unit 12 which includes a switch 14 (shown in its open position for ease of explanation) for connecting a consumer's supply 16 with a mains supply 18 when the switch 14 is closed. The switch 14 is typically operated by a solenoid arrangement 20 in response to signals from a memory 22 which stores a value relating to the amount of electricity credited to the consumer. When the credit is exhausted, the memory 22 sends a signal to the solenoid arrangement 20 which causes the solenoid arrangement 20 to open the switch 14 and to break the connection between the consumer's supply 16 and the mains supply 18. When a further credit is input to the meter 10 and stored in the memory 22, the solenoid arrangement 20 is operated to close the switch 14 thereby re-connecting the consumer's supply 16 to the mains supply 18.

The metering unit 12 operates to measure the amount of electricity which is consumed by a consumer as is well known in the art and to control the operation of the switch 14 in accordance with that consumption and the credit stored in the memory 22.

The meter 10 also comprises an input unit 24 which is connected to the metering unit 12 by means of a connection 26. The input unit 24 operates to receive one or more 'tokens' relating to the amount of electricity purchased and to provide the memory 22 in the metering unit 12 with a 'credit' value. A 'token' will be described in detail later.

An automatic meter reading device 28 is also included in the meter 10. The meter reading device 28 is connected to the metering unit 12 by means of connection 30 and includes an accumulator 32 for accumulating data from the metering unit 12 and a transmitter 34 for transmitting the accumulated data stored in the accumulator 32 to a central collection unit (not shown).

Naturally, the transmitter 34 may comprise a transceiver being functional as both a transmitter and a receiver. In this case, the meter arrangement 10 may also receive signals from the central collection unit, for example, to instruct the switch 14 to open as all the electricity consumed has not already been purchased.

The device 28 periodically collects data from the metering unit 12 relating to the amount of electricity consumed and other data stored on the 'token' input into the input unit 24. Each period over which the data is accumulated may be daily, weekly, monthly, or any other suitable interval.

However, it is preferred that the accumulation period is half-hourly for the metering unit and monthly for the central collection unit. This will allow the records collected at the central collection point to be used to create a model of which electricity supplier's energy was being consumed at any given time.

Whilst it is to be noted that connections 26, 30 are shown as physical connections, such as, an electrical connection, they may comprise wireless links e.g. radio links or any other type of suitable connection.

Moreover, with some types of connection, the component parts of the metering arrangement shown in the Figure may be remotely located from one another.

The term 'token' is used to refer to a coded receipt which is issued by the point-of-sale and which includes coded information relating to the electricity supplier from whom the electricity has been purchased, the amount of electricity purchased, and the point-of-sale itself. Ideally, the coded receipt for a purchase of energy is provided in a form which can be entered through the input unit 24.

In one embodiment of the present invention, the coded receipt comprises a bar code and the input unit 24 comprises a bar-code scanner. Thus, the consumer may purchase energy from an electricity supplier who will issue a suitably-encoded receipt in the form of, say, a bar-code. This receipt is then presented to the coded receipt input means and the transaction information is recorded and included in the continuing record of consumption data.

However, it will be appreciated that the coded receipt may take many other forms and the input unit 24 will naturally reflect these other forms, for example, alphanumeric keypads (the coded receipt being an alphanumeric code which is entered into the keypad), smart card readers (the coded receipt being stored on a smart card), magnetic card readers (the coded receipt being stored on a magnetic stripe on a magnetic data card), and other special token acceptors.

By using a coded receipt in association with input unit 24, additional information can be included in the consumption records forwarded from the meter 10 to the central collection unit, for example, the additional information includes details of energy purchases made from various different electricity suppliers/utility companies.

It will be understood that an electricity supply system which operates with coded receipts as described above is not limited to a prepayment supply system, but can be used for other types of payment systems, for example, systems in which the consumer is billed every quarter.

There are many possible algorithms which may be used by the central collection unit for allocating the purchased quantities to the consumption records, but in a preferred simple algorithm, it can be assumed that energy is consumed in the same order as that in which it was purchased. Other possibilities are envisaged, however, where some receipts will cover energy used between certain hours of the day, or certain days of the week; others may be post-dated for validation at a future time; yet others may have expiry dates which invalidate them after a certain date.

However, it will be apparent that the situation may arise where the information obtained from the coded receipts indicates that insufficient purchases from individual electricity suppliers have been made to a particular consumer's account for total electricity consumed. In order to overcome this problem, any electricity consumption not already purchased will be allocated to a particular electricity supplier, for example, a default electricity supplier, who will act in the role of underwriter for the consumer and who will also fulfil the legal and regulatory requirements for as long as they remain in force. Alternatively, an appropriate monitoring means at the central collection point could be used to check that sufficient purchases had been made and to discontinue the service through communications with the meter 10 if necessary.

It will be appreciated that there may be no requirement for the input unit 24 to be physically juxtaposed to the metering unit 12 as described above with reference to the Figure or any of the other units comprising the meter 10. Provided that the coded receipts are appropriately time-stamped with the time of purchase then they can be processed in conjunction with collected energy consumption data at the central collection point in the same manner as described above. Thus, the coded receipts may be communicated via radio, telephone, internet or other suitable channels.

Furthermore, it is known that for certain residential applications, the half-hourly consumption data may be calculated on a statistical basis rather than actually recorded half hour by half hour. This process is known as 'profiling' and involves using real averaged half-hourly demographic consumption data, and relatively infrequent meter readings to synthesise half-hourly profiles for each individual consumer. Nevertheless, it is envisaged that the time-stamped coded receipts can be processed in conjunction with this synthesised data to determine which electricity supplier's purchase receipt was valid for each consumer at all times.

The system of the present invention has several advantages:-

First, electricity consumers will be able to switch from one electricity supplier to another and back again as frequently as they wish, without causing the considerable costs and administrative delays which arise today.

Secondly, electricity suppliers will have no need to keep consumer accounts or to issue bills.

Thirdly, there will be an incentive for the underwriting electricity supplier to invest in the necessary equipment because they will anticipate an increased likelihood that the consumer will continue to use the system because it facilitates shopping around for the best prices. This is in sharp contrast to current single-supplier solutions which are intended to discourage shopping around in order to protect investments.

Fourthly, the system of the present invention can be operated at a fixed cost to the electricity suppliers so they will know very accurately what their real costs are at all times.

Fifthly, electricity suppliers will be able to meet some country-specific regulatory obligations to forecast demand based on the number and value of 'future' receipts they have actually sold.

Moreover, all the necessary information for aggregation and settlement purposes is generated automatically and there is no need for the electricity suppliers/utility companies to take the risk of investing in special equipment for consumers whom they may not retain.

The use of the coded receipt in accordance with the invention can also be used to dis-aggregate business from a standard bill with the corrections relating to data collection, data aggregation and settlement processes being made automatically. This maybe of benefit to home-office environments.

## Claims

1. A metering arrangement for metering the supply of a commodity to a consumer, the arrangement comprising:-
a metering unit (12) connected to supply the commodity to the consumer;
a data collection unit (28) associated with the metering unit for collecting data relating to the amount of the commodity consumed; and
an input unit (24) for receiving data input from a coded receipt which is coded in accordance with an amount of the commodity supplied and a particular commodity supplier, the input unit being operable to control the connection of the commodity supply (18).

2. An arrangement according to claim 1, wherein the data input is also passed to the data collection unit.

3. An arrangement according to claim 1 or 2, further comprising a central collection unit arranged to collect data collected by the data collection unit and for apportioning the commodity consumed by the consumer from one or more commodity suppliers.

4. An arrangement according to any one of the preceding claims, wherein the commodity supply comprises an electricity supply.

5. An arrangement according to any one of claims 1 to 3, wherein the commodity supply comprises a gas supply.

6. An arrangement according to any one of claims 1 to 3, wherein the commodity supply comprises a water supply.

7. A method of metering the supply of supply of a commodity to a consumer from a commodity supply (18), comprising the steps of:
connecting a metering unit (12) to a commodity supply:
collecting data relating to the amount of commodity consumed: receiving data from a coded receipt by an input unit (24); and;
controlling the connection of the commodity supply:
wherein the coded receipt is coded in accordance with an amount of commodity to be supplied and a particular commodity supplier.

8. A method according to claim 7 where the data received by the input unit is transferred to the metering unit for controlling the connection of the commodity supply.

9. A method according to claim 7 wherein the data input is also transferred to the data collection unit.

10. A method according to claim 7 or 8 wherein there are at least two commodity suppliers for a particular commodity and there is provided a control collection unit;
wherein the control collection unit collects data collected by consumer data collection units and apparatus for each consumer, the commodity consumed to at least two commodity suppliers
